# EUROPÄISCHE PATENTSCHRIFT

(11) **EP 1 608 527 B1**
(45) Veröffentlichungstag und Bekanntmachung des Hinweises auf die Patenterteilung: **02.09.2009**
(21) Anmeldenummer: 04719939.3
(22) Anmeldetag: 12.03.2004
(51) Int. Cl.: B60N 2/20

(54) **BESCHLAGSYSTEM FÜR EINEN FAHRZEUGSITZ**
FITTING SYSTEM FOR A VEHICLE SEAT
SYSTEME DE FERRURES DESTINE A UN SIEGE DE VEHICULE

(30) Priorität: 03.04.2003 DE 10315375
(43) Veröffentlichungstag der Anmeldung: 28.12.2005
(73) Patentinhaber: KEIPER GmbH & Co. KG, 67657 Kaiserslautern (DE)
(72) Erfinder: THIEL, Peter, 42899 Remscheid (DE); RABBACH, Andreas, 42697 Solingen (DE)
(74) Vertreter: Patentanwälte Hosenthien-Held und Dr. Held
(86) Internationale Anmeldenummer: PCT/EP2004/002563
(87) Internationale Veröffentlichungsnummer: WO 2004/087458

(56) Entgegenhaltungen:
- DE-A- 3 828 659
- FR-A- 2 628 371
- US-A- 4 629 252
- US-A- 5 997 090
- US-B1- 6 513 875
- US-B1- 6 513 876

## Beschreibung

Die Erfindung betrifft ein Beschlagsystem für einen Fahrzeugsitz, insbesondere für einen Kraftfahrzeugsitz, mit den Merkmalen des Oberbegriffs des Anspruches 1.

In der DE 38 28 659 A1 ist ein Beschlagsystem offenbart, welches einen in mehreren Stufen mittels einer Klinke verriegelbaren Einstellbeschlag als voll funktionsfähigen ersten Beschlag, der am Sitzteil eines Fahrzeugsitzes angebracht ist, und einen am Einstellbeschlag angebrachten, durch einen Sperrhebel in einer Stellung verriegelbaren Klappbeschlag als einfachen zweiten Beschlag aufweist, wobei der Knappbeschlag mit der Lehne verbunden ist. Durch Betätigen des Einstellbeschlags können verschiedene Gebrauchsstellung und eine Liegestellung eingestellt werden. Wird bei entriegeltem Einstellbeschlag die Lehne nach vorne geschwenkt, so wird bei Erreichen der vordersten Gebrauchsstellung - sofern kein Hindernis im Weg ist - der Klappbeschlag automatisch entriegelt, und die Lehne kann um eine höher gelegene Drehachse in eine Tischstellung geklappt werden. Um undefinierte Bewegungen zu vermeiden, muss dazu der Einstellbeschlag wieder verriegelt werden.

Aus der US 5,997,090 A ist ein Beschlagsystem der eingangs genannten Art bekannt, welches als Einzelbeschläge zwei Rastbeschläge aufweist, die bezüglich der Achsen radial versetzt zu einander angeordnet sind. Es ist ein gemeinsames erstes Beschlagteil vorgesehen, welches jeweils Führungen für die jeweiligen Riegel aufweist, während die zweiten Beschlagteile unabhängig voneinander sind und einerseits am Sitzteil und andererseits an der Lehne eines Fahrzeugsitzes angebracht sind. Ein gemeinsamer Betätigungshebel entriegelt je nach Schwenkrichtung einen der beiden Rastbeschläge, wobei jeweils Leergänge zur Entkopplung vorgesehen sind.

Der Erfindung liegt die Aufgabe zu Grunde, ein Beschlagsystem der eingangs genannten Art zu verbessern. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

Indem der erste Beschlag und der zweite Beschlag als voll funktionsfähige Einstellbeschläge gesondert ausgebildet sind, nämlich der erste Beschlag als selbsthemmender Getriebebeschlag und der zweite Beschlag als Rastbeschlag, steht ein modulares System zur Verfügung, bei dem eigenständige, geschlossene Standard-Einheiten, die jeweils für sich funktionsfähig sind, beispielsweise selbsttätig in mehreren möglichen Stellungen verriegeln, entsprechend den Anforderungen an das Beschlagsystem und den vorgegebenen geometrischen Verhältnissen untereinander unter Hinzufügung von Adaptern kombiniert werden können.

Die Einstellbeschläge können beispielsweise eine Normalform mit Adaptionslaschen und Halteblechen oder eine Scheibenform mit Adaptionswarzen aufweisen. Eine oder beide Beschläge können motorisch antreibbar sein, wobei der Antrieb in der Lehne oder im Sitzteil vorgesehen sein kann. Übertragungsstangen zwischen den beiden Fahrzeugsitzseiten können in das Zentrum der Beschläge greifen oder versetzt dazu angeordnet sein.

Zur Vermeidung undefinierter Bewegungen schließen vorzugsweise die Einstellbereiche des ersten Beschlags und des zweiten Beschlags aneinander an und ergänzen einander. Beim zweiten Beschlag ist ein Vorspannen gegen die Grenzstellung aufgrund der Kraft, die der Insasse auf die Lehne ausübt, und des Gewichts der Lehne, die den zweiten Beschlag in der Grenzstellung halten, nicht notwendig, kann aber trotzdem so vorgesehen sein.

Das erfindungsgemäße Beschlagsystem ist prinzipiell für alle Fahrzeugsitze mit einstellbarer Lehne einsetzbar, bevorzugt aber für Kraftfahrzeugsitze, deren Lehne eine Tischklappfunktion aufweist und zur Vermeidung einer großen Polsterpressung einer höher gelegenen Drehachse bedarf.

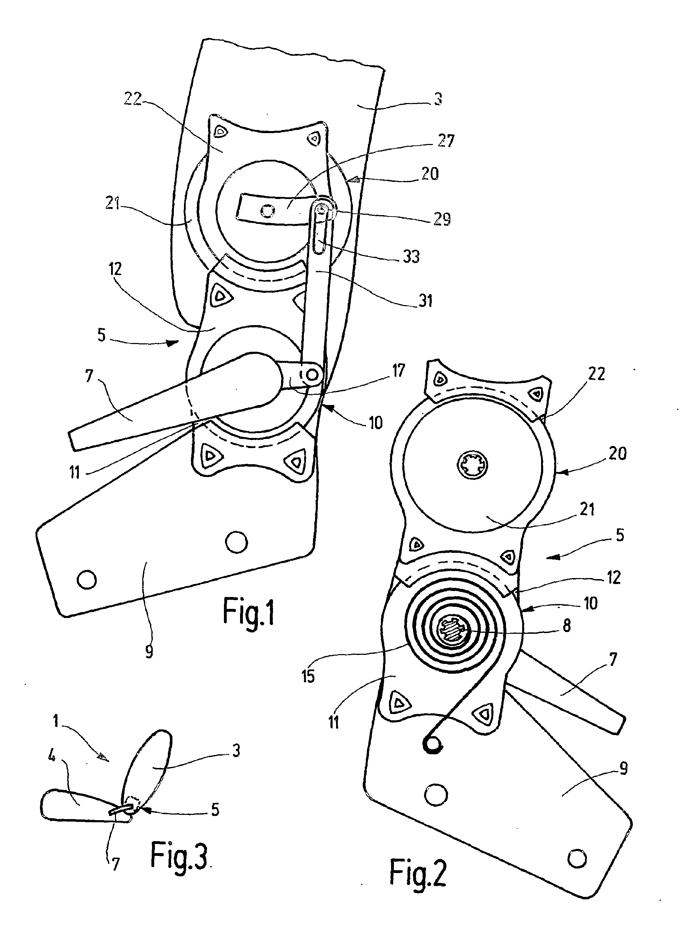

Im folgenden ist die Erfindung anhand von zwei nicht zur Erfindung gehörigen Studien und zwei Ausführungsbeispielen, die in der Zeichnung dargestellt sind, näher erläutert. Es zeigen
- Fig. 1: eine Ansicht der nach außen gewandten Seite der ersten Studien in der Grenzstellung,
- Fig. 2: eine Ansicht der nach innen gewandten Seite der ersten Studie in der Grenzstellung,
- Fig. 3: eine schematische Darstellung eines Fahrzeugsitzes,

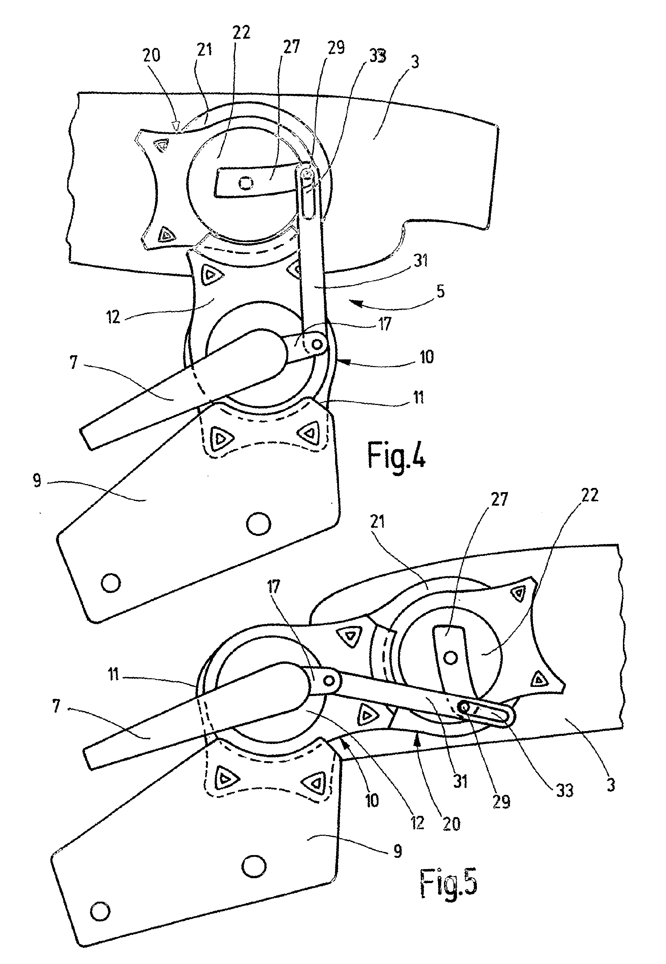

- Fig. 4: eine Ansicht entsprechend Fig. 1 in der Tischstellung,
- Fig. 5: eine Ansicht entsprechend Fig. 1 in der Liegestellung,

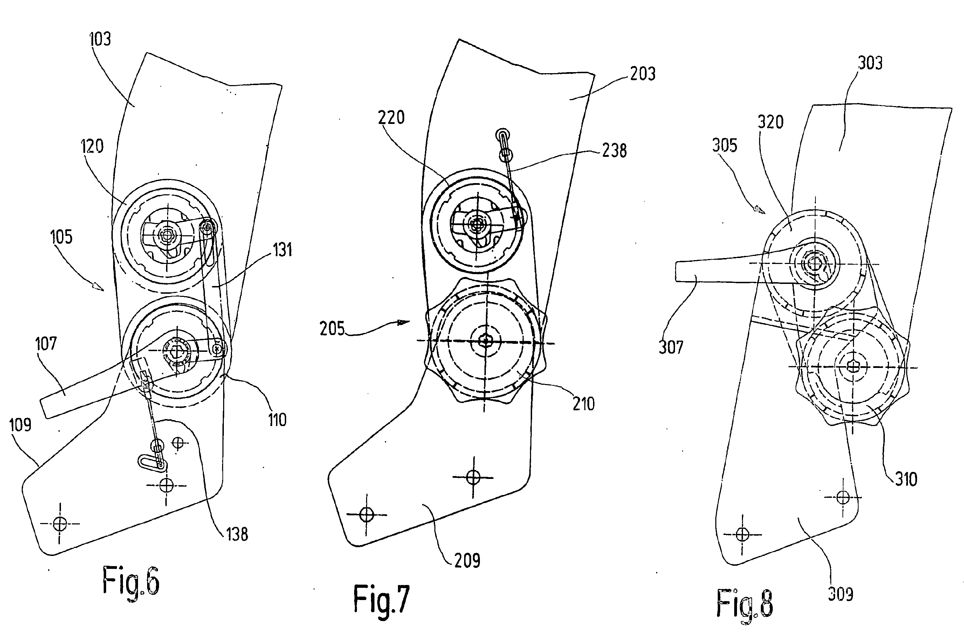

- Fig. 6: eine Ansicht der nach außen gewandten Seite der zweiten Studie in der Grenzstellung,
- Fig. 7: eine Ansicht der nach außen gewandten Seite des ersten Ausführungsbeispiels in der Grenzstellung, und
- Fig. 8: eine Ansicht der nach außen gewandten Seite des zweiten Ausführungsbeispiels in der Grenzstellung.

Inder ersten Studie ist bei einem Fahrzeugsitz 1 für ein Kraftfahrzeug eine Lehne 3 in ihrer Neigung relativ zu einem Sitzteil 4 einstellbar, wodurch mehrere einsitzbare, im wesentlichen aufrechte Gebrauchsstellungen definiert werden. Außerdem ist die Lehne 3 nach vorne in eine Tischstellung, in welcher ihre Rückseite nahezu horizontal angeordnet ist, und nach hinten in eine Liegestellung klappbar, in welcher sie etwa um 75° gegenüber der Vertikalen geneigt ist. Hierfür ist der Fahrzeugsitz 1 auf beiden Seiten mit je einem Beschlagsystem 5 versehen. Auf einer Seite des Fahrzeugsitzes 1 ist an einem der beiden ansonsten spiegelbildlichen Beschlagsysteme 5 ein für den Benutzter zugänglicher Entriegelungshebel 7 vorgesehen, wobei die beiden Beschlagsysteme 5 für ein synchrones Entriegeln mittels einer horizontalen Übertragungsstange 8 oder einem Seilzug miteinander in Wirkverbindung stehen. Im folgenden ist der Einfachheit halber nur das Beschlagsystem 5 auf der Seite mit dem Entriegelungshebel 7 beschrieben.

Das Beschlagsystem 5 ist an seinem unteren Ende an einem Adapter 9 angebracht, welcher fest mit der Struktur des Sitzteils 4 verbunden ist. Das Beschlagsystem 5 umfasst zwei gesondert ausgebildete Baugruppen. Als erste Baugruppe ist ein erster Beschlag 10 (Lehneneinstellbeschlag) mit einem der Anbringung am Adapter 9 dienenden ersten Beschlagunterteil 11 und einem relativ zum ersten Beschlagunterteil 11 verdrehbaren und in verschiedenen Stellungen verriegelbaren ersten Beschlagoberteil 12 vorgesehen.

Der voll funktionsfähige erste Beschlag 10 funktioniert nach einem Rastprinzip, d.h. im verriegelten Zustand verhindern Zahnsegmente, die im ersten Beschlagunterteil 11 beweglich gelagert und über eine federbeaufschlagte Exzenterscheibe radial nach außen vorgespannt sind, durch einen Zahneingriff mit dem ersten Beschlagoberteil 12 eine Relativdrehung. Durch eine Schwenkbewegung des als erstes Lösemittel vorgesehenen Entriegelungshebels 7 nach oben werden die Zahnsegmente radial nach innen gezogen und geben dadurch das erste Beschlagoberteil 12 frei. Der erste Beschlag 10 auf der anderen Fahrzeugsitzseite wird mittels Drehung der mit dem Entriegelungshebel 7 drehfest verbundenen Übertragungsstange 8 als erstem Lösemittel entriegelt.

Der das erste Beschlagoberteil 12 teilweise übergreifende Adapter 9 dient als ein Halteblech dem axialen Zusammenhalt von erstem Beschlagunterteil 11 und erstem Beschlagoberteil 12. Eine spiralförmig aufgewickelte Kompensationsfeder 15, die zur Kompensation des Gewichts der Lehne 3 dient, ist am äußeren Ende am Adapter 9 und am inneren Ende am ersten Beschlagoberteil 12 abgestützt und spannt das erste Beschlagoberteil 12 in Fahrtrichtung nach vorne vor. Am Entriegelungshebel 7 ist eine nach hinten abstehende Lasche 17 für eine später beschriebene Kopplung angeformt.

Als zweite Baugruppe des Beschlagsystems 5 ist ein zweiter Beschlag 20 (Lehnenklappbeschlag) vorgesehen, welcher ein am ersten Beschlagoberteil 12 angebrachtes zweites Beschlagunterteil 21 und ein relativ zum zweiten Beschlagunterteil 21 verdrehbares und in wenigstens zwei Stellungen verriegelbares zweites Beschlagoberteil 22 aufweist. Das zweite Beschlagoberteil 22 ist mit der Struktur der Lehne 3 fest verbunden.

Die beiden Beschläge 10 mund 20 weisen eine Normalform auf, d.h. jedes Beschlagunterteil 11 und 21 und jedes Beschlagoberteil 12 und 22 ist mit je zwei angeformten Adaptionslaschen zur gegenseitigen Anbringung und zur Anbringung am Adapter 9 und an der Lehne 3 versehen, und die beiden Beschlagteile eines Beschlags werden durch Haltebleche axial zusammengehalten. Das zweite Beschlagunterteil 21 kann bei entsprechendem Übergreifen des ersten Beschlagoberteils 12 als Halteblech für den axialen Zusammenhalt des ersten Beschlags 10 ausgebildet sein, während das erste Beschlagoberteil 12 entsprechend als Halteblech für den axialen Zusammenhalt des zweiten Beschlags 20 dienen kann. Es können aber auch jeweils gesondertes Haltebleche vorgesehen sein.

Der zweite Beschlag 20 ist ebenfalls als voll funktionsfähiger Rastbeschlag ausgebildet, der wenigstens in einer gestreckten Ausrichtung der beiden zweiten Beschlagteile 21 und 22 und in einer im rechten Winkel stehenden Anordnung der beiden zweiten Beschlagteile 21 und 22 verriegelt. Die Anzahl der verriegelbaren Stellungen kann durch einen einlegbaren Ring gemäß der DE 199 28 148 A1 definiert werden. Zum Entriegeln ist als zweites Lösemittel ein drehbar gelagerter Lösehebel 27 vorgesehen, der an seinem freien Ende einen Zapfen 29 trägt und ansonsten drehfest mit der Exzenterscheibe des zweiten Beschlags 20 verbunden ist.

Zur Kopplung des Entriegelungsvorgangs des ersten Beschlags 10 und des zweiten Beschlags 20 ist eine längliche Koppel 31 vorgesehen, welche am oberen Ende einen Schlitz 33 aufweist, mit dem sie den Zapfen 29 umgreift, und am unteren Ende an der Lasche 17 angelenkt ist.

Durch nicht näher dargestellte Anschläge oder entsprechende Ausgestaltungen der Haltebleche ist der Schwenkbereich des ersten Beschlagoberteils 12 auf den Bereich zwischen der Liegestellung und einer Grenzstellung beschränkt, wobei in dieser zugleich die vorderste Gebrauchsstellung markierenden Grenzstellung das erste Beschlagoberteil 12 vertikal ausgerichtet ist und durch die Kompensationsfeder 15 gegen diesen vorderen Anschlag gespannt ist. Entsprechend ist der Schwenkbereich des zweiten Beschlags 20 auf den Bereich zwischen der Grenzstellung und hierzu senkrechten Tischstellung beschränkt. Die Einstellbereiche von erstem Beschlag 10 und zweitem Beschlag 20 schließen also aneinander an und ergänzen sich.

Für jede Änderung der Einstellung der Lehne 3 wird der Entriegelungshebel 7 betätigt, wodurch das Beschlagsystem 5 als Ganzes, d.h. der erste Beschlag 10 direkt und der zweite Beschlag 20 über die Lasche 17, die Koppel 31 und den Lösehebel 27 entriegelt wird. Bei der Neigungseinstellung der Lehne 3 für den Sitzgebrauch, also von der Grenzstellung ab nach hinten, und beim Übergang in die Liegestellung wird lediglich die Einstellung des ersten Beschlags 10 geändert, während der zweite Beschlag 20 durch die vom Insassen ausgeübte Kraft und das Gewicht der Lehne 3 sowie der Reaktionskraft der Kompensationsfeder 15 an seinem hinteren Anschlag gehalten wird. Die durch den Schlitz 33 in der Koppel 31 und den Zapfen 29 auf dem Lösehebel 27 gebildete Schlitz-Zapfen-Führung gleicht in den flacheren Stellungen der Lehne 3 nach dem erneuten Verriegeln des Beschlags 5 die geänderten Geometrieverhältnisse zwischen Entriegelungshebel 7 und Lösehebel 27 aus. Die Kompensationsfeder 15 unterstützt die Rückkehr in aufrechtere Stellungen.

Beim Übergang in die Tischstellung hält die Kompensationsfeder 15 den ersten Beschlag 10 an seinem vorderen Anschlag, während der zweite Beschlag 20 nach vorne geklappt werden kann und bei Erreichen der Tischstellung verriegelt. Die Kompensationsfeder 15 ist so stark ausgelegt, daß bei der Rückkehr in eine Gebrauchsstellung zunächst der zweite Beschlag 20 hoch zu seinem hinteren Anschlag geklappt werden kann, bevor der erste Beschlag 10 nach hinten schwenkt.

Die zweite Studie gleicht der ersten Studie, sofern nachfolgend nicht abweichend beschrieben, weshalb gleiche und gleichwirkende Bauteile um 100 höhere Bezugszeichen tragen. Bei dem Beschlagsystem 105 des zweiten Ausführungsbeispiels ist ebenfalls ein mittels eines Adapters 109 sitzteilfester, voll funktionsfähiger, erster Beschlag 110 zur Lehnenneigungseinstellung und ein mit der Lehne 103 verbundener, vollfunktionsfähiger zweiter Beschlag 120 zur Lehnenklappung vorgesehen. Beide Beschläge 110 und 120 sind wie im ersten Ausführungsbeispiel als Rastbeschläge ausgebildet. Der zweite Beschlag 120 ist oberhalb des ersten Beschlags 110 angeordnet und entriegelt mittels einer Koppel 131 mit Schlitz-Zapfen-Führung synchron mit dem ersten Beschlag 110. Auf einer Fahrzeugsitzseite weist der erste Beschlag 110 einen Entriegelungshebel 107 auf, während die Kopplung zur anderen Fahrzeugsitzseite über einen Seilzug 138 erfolgt. Der zweite Beschlag 120 weist eine geschlossene Scheibenform in der Art der DE 101 05 282 A1 auf. d.h. ein aufgepresster Ring hält die beiden Beschlagteile zusammen, welche stirnseitig mit dem ersten Beschlag 110 und der Lehne 103 verbunden sind. Die für die Anbindung relevanten Abmessungen der Scheibenform stimmen mit der bei der ersten Studie beschriebenen Normalform überein, so daß die Scheibenform und die Normalform untereinander austauschbar sind.

Das erste Ausführungsbeispiel gleicht den beiden Studien, sofern nachfolgend nicht abweichend beschrieben, weshalb gleiche und gleichwirkende Bauteile um 200 bzw. 100 höhere Bezugszeichen tragen. Bei dem Beschlagsystem 205 des ersten Ausführungsbeispiels ist ebenfalls ein mittels eines Adapters 209 sitzteilfester, voll funktionsfähiger, als Getriebebeschlag ausgebildeter erster Beschlag 210 zur Lehnenneigungseinstellung und ein mit der Lehne 203 verbundener, voll funktionsfähiger, als Rastbeschlag ausgebildeter zweiter Beschlag 220 zur Lehnenklappung vorgesehen. Der zweite Beschlag 220 ist oberhalb des ersten Beschlags 210 angeordnet und entriegelt mittels eines Seilzuges 238 zusammen mit dem ensprechenden zweiten Beschlag 210 auf der anderen Fahrzeugsitzseite. Die synchrone Betätigung der beiden ersten Beschläge 210 erfolgt über eine nicht näher dargestellte Übertragungsstange. Die Kompensationsfeder entfällt, da der erste Beschlag 210 selbsthemmend ist. Beide Beschläge 210 und 220 weisen die zuvor beschriebene Scheibenform auf.

Das zweite Ausführungsbeispiel gleicht dem ersten Ausführungsbeispiel, sofern nachfolgend nicht abweichend beschrieben, weshalb gleiche und gleichwirkende Bauteile um 100 höhere Bezugszeichen tragen. Bei dem Beschlagsystem 305 des zweiten Ausführungsbeispiels ist der voll funktionsfähige, als Getriebebeschlag ausgebildete erste Beschlag 310 zur Lehnenneigungseinstellung mit der Lehne 303 verbunden, während der oberhalb davon und etwas davor angeordnete, vollfunktionsfähige, als Rastbeschlag ausgebildete zweite Beschlag 320 für die Lehnenklappung mittels des Adapters 309 sitzteilfest ist. Die Klappachse ist also sitzteilfest, im Gegensatz zu der lehnenfesten Klappachse der anderen Ausführungsbeispiele. Der zweite Beschlag 320 entriegelt mittels eines Entriegelungshebels 307 auf einer Seite und einer nicht näher dargestellten Übertragungsstange auf der anderen Fahrzeugsitzseite. Die synchrone Betätigung der beiden ersten Beschläge 310 erfolgt ebenfalls über eine nicht näher dargestellte Übertragungsstange. Eine Kompensationsfeder ist wiederum nicht notwendig. Beide Beschläge 310 und 320 weisen die eingangs beschriebene Normalform mit Halteblechen und angeformten Adaptionslaschen auf.

### Bezugszeichenliste

- 1: Fahrzeugsitz
- 3, 103, 203, 303: Lehne
- 4: Sitzteil
- 5, 105, 205, 305: Beschlagsystem
- 7, 107, 307: Entriegelungshebel
- 8: Übertragungsstange
- 9, 109, 209, 309: Adapter
- 10, 110, 210, 310: erster Beschlag
- 11: erstes Beschlagunterteil
- 12: erstes Beschlagoberteil
- 15: Kompensationsfeder
- 17: Lasche
- 20, 120, 220, 320: zweiter Beschlag
- 21: zweites Beschlagunterteil
- 22: zweites Beschlagoberteil
- 27: Lösehebel
- 29: Zapfen
- 31,131: Koppel
- 33: Schlitz
- 138,238: Seilzug

## Patentansprüche

1. Beschlagsystem für einen Fahrzeugsitz, insbesondere für einen Kraftfahrzeugsitz, zur Neigungseinstellung einer Lehne (3; 203; 303) relativ zu einem Sitzteil (4) des Fahrzeugsitzes (1), mit einem ersten Beschlag (210; 310) und einem oberhalb des ersten Beschlags (210; 310) angeordneten und an demselben angebrachten zweiten Beschlag (220; 320), welche beide als voll funktionsfähige Einstellbeschläge ausgebildet sind, wobei die Lehne (3; 203; 303) mittels Betätigung des ersten Beschlags (210; 310) zwischen verschiedenen aufrechten Gebrauchsstellungen oder zwischen verschiedenen aufrechten Gebrauchsstellungen und einer nach hinten geneigten Liegestellung einstellbar ist, und wobei nach Entriegeln des zweiten Beschlags (220; 320) die Lehne (203; 303) zwischen wenigstens einer aufrechten Gebrauchsstellung und einer nach vorne geklappten Tischstellung einstellbar ist, **dadurch gekennzeichnet, dass** der erste Beschlag (210; 310) als selbsthemmender Getriebebeschlag und gesondert davon der zweite Beschlag (220; 320) als Rastbeschlag ausgebildet ist.

2. Beschlagsystem nach Anspruch 1, **dadurch gekennzeichnet, dass** der erste Beschlag (210; 310) und der zweite Beschlag (220; 320) eine Normalform mit angeformten Halteblechen und angeformten Adaptionslaschen oder eine Scheibenform aufweisen.

3. Beschlagsystem nach Anspruch 1 oder 2, **dadurch gekennzeichnet, dass** die Einstellbereiche des ersten Beschlags (210; 310) und des zweiten Beschlags (220; 320) aneinander anschließen und einander ergänzen.

4. Beschlagsystem nach einem der Ansprüche 1 bis 3, **dadurch gekennzeichnet, dass** der erste Beschlag (210) sitzteilfest ist, insbesondere mittels eines Adapters (209), während der zweite Beschlag (220) mit der Lehne (3; 203) verbunden ist.

5. Beschlagsystem nach einem der Ansprüche 1 bis 3, **dadurch gekennzeichnet, dass** der zweite Beschlag (320) sitzteilfest ist, insbesondere mittels eines Adapters (309), während der erste Beschlag (310) mit der Lehne (3; 303) verbunden ist.

6. Fahrzeugsitz mit einem Sitzteil (4) und einer relativ zum Sitzteil (4) neigungseinstellbaren Lehne (3; 203; 303), **gekennzeichnet durch** ein Beschlagsystem (5; 205; 305) nach einem der Ansprüche 1 bis 5 auf beiden Seiten des Fahrzeugsitzes (1).

7. Fahrzeugsitz nach Anspruch 6, **dadurch gekennzeichnet, dass** die beiden ersten Beschläge (210; 310) mittels einer Übertragungsstange synchron betätigt werden.

8. Fahrzeugsitz nach Anspruch 6 oder 7, **dadurch gekennzeichnet, dass** die beiden zweiten Beschläge (220) mittels eines Seilzuges (238) zusammen entriegelt werden.

9. Fahrzeugsitz nach Anspruch 6 oder 7, **dadurch gekennzeichnet, dass** die beiden zweiten Beschläge (320) mittels eines Entriegelungshebels (307) auf einer Seite und einer Übertragungsstange auf der anderen Seite entriegeln.

## Claims

1. A fitting system for a vehicle seat, in particular for a motor vehicle seat, used for adjusting the inclination of a backrest (3; 203; 303) relative to a seat part (4) of the vehicle seat (1), having a first fitting (210; 310) and a second fitting (220; 320) arranged above and attached to the first fitting (210; 310), both being designed as entirely functional adjustment fittings, wherein, by actuation of the first fitting (210; 310), the backrest (3; 203; 303) is adjustable between various upright use positions or between at least one upright use position and a rearward-inclined recline position, and wherein after the second fitting (220; 320) is unlocked, the backrest (3; 203; 303) is adjustable between at least one upright use position and a forward-tilted table position, **characterized in that** the first fitting (210; 310) is designed as a self-locking geared fitting, and, separately of it, the second fitting (220; 320) is designed as a detent fitting.

2. The fitting system according to Claim 1, **characterized in that** the first fitting (210; 310) and the second fitting (220; 320) have a normal shape, with retaining plates formed thereon and adaptation tongues formed thereon, or a disc shape.

3. The fitting system according to Claim 1 or 2, **characterized in that** the ranges of adjustment of the first fitting (210; 310) and of the second fitting (220; 320) adjoin and complete each other.

4. A fitting system according to one of the Claims 1 to 3, **characterized in that** the first fitting (210) is firmly connected to the seat part, in particular by means of an adapter (209), while the second fitting (220) is connected to the backrest (3; 203).

5. A fitting system according to one of the Claims 1 to 3, **characterized in that** the second fitting (320) is firmly connected to the seat part, in particular by means of an adapter (309), while the first fitting (310) is connected to the backrest (3; 303).

6. A vehicle seat with a seat part (4) and a backrest (3; 203; 303), the inclination of which can be adjusted relative to the seat part (4), **characterized by** a fitting system (205; 305) according to one of Claims 1 to 5.

7. The vehicle according to Claim 6, **characterized in that** the two first fittings (210; 310) are simultaneously actuated together by means of a transmission rod.

8. The vehicle according to Claims 6 or 7, **characterized in that** the two second fittings (220) are unlocked together by means of a cable pull (238).

9. The vehicle according to Claims 6 or 7, **characterized in that** the two second fittings (220; 320) are unlocked by means of an unlocking lever (307) on one side and by means of a transmission rod on the other side.

## Revendications

1. Système d'armatures pour un siège de véhicule, en particulier pour un siège de véhicule automobile, pour un réglage en inclinaison d'un dossier (3 ; 203 ; 303) par rapport à une partie de siège (4) du siège de véhicule (1), comportant une première armature (210 ; 310) et une seconde armature (220 ; 320) disposée au-dessus de la première armature (210 ; 310) et fixée sur celle-ci, lesquelles sont toutes deux réalisées sous la forme d'armatures de réglage entièrement fonctionnelles, le dossier (3 ; 203 ; 303) étant réglable au moyen de l'actionnement de la première armature (210 ; 310) entre différentes positions d'utilisation droites ou entre différentes positions d'utilisation droites et une position couchée inclinée vers l'arrière, et, après déverrouillage de la deuxième armature (220 ; 320), le dossier (203 ;303) étant réglable entre au moins une position d'utilisation droite et une position de tablette rabattue vers l'avant, **caractérisé par le fait que** la première armature (210 ; 310) est réalisée en tant qu'armature à engrenage à blocage automatique et, séparément de cela, la deuxième armature (220 ; 320) est réalisée en tant qu'armature à verrouillage.

2. Système d'armatures selon la revendication 1, **caractérisé par le fait que** la première armature (210 ; 310) et la deuxième armature (220 ; 320) présentent une forme normale avec des tôles de support façonnées et des pattes d'adaptation façonnées ou une forme de disque.

3. Système d'armatures selon l'une des revendications 1 ou 2, **caractérisé par le fait que** les zones de réglage de la première armature (210 ; 310) et de la deuxième armature (220 ; 320) se raccordent entre elles et se complètent l'une l'autre.

4. Système d'armatures selon l'une des revendications 1 à 3, **caractérisé par le fait que** la première armature (210) est solidaire de la partie de siège, en particulier au moyen d'un adaptateur (209), alors que la deuxième armature (220) est reliée avec le dossier (3 ; 203).

5. Système d'armatures selon l'une des revendications 1 à 3, **caractérisé par le fait que** la deuxième armature (320) est solidaire de la partie de siège, en particulier au moyen d'un adaptateur (309), alors que la première armature (310) est reliée avec le dossier (3 ; 303).

6. Siège de véhicule présentant une partie de siège (4) et un dossier (3 ; 203 ; 303) réglable en inclinaison par rapport à la partie de siège (4), **caractérisé par** un système d'armatures (5 ; 205 ; 305) tel que défini à l'une des revendications 1 à 5 sur les deux côtés du siège de véhicule (1).

7. Siège de véhicule selon la revendication 6, **caractérisé par le fait que** les deux premières armatures (210 ; 310) sont actionnées de façon synchrone au moyen d'une tige de transmission.

8. Siège de véhicule selon l'une des revendications 6 ou 7, **caractérisé par le fait que** les deux deuxièmes armatures (220) sont déverrouillées ensemble au moyen d'une commande par câble (238).

9. Siège de véhicule selon l'une des revendications 6 ou 7, **caractérisé par le fait que** les deux deuxièmes armatures (320) se déverrouillent au moyen d'un levier de déverrouillage (307) sur un côté et d'une tige de transmission sur l'autre côté.
